# Europäisches Patentamt
# European Patent Office
# Office européen des brevets

(19)

(11) Veröffentlichungsnummer: **0 031 506**
**B1**

(12) **EUROPÄISCHE PATENTSCHRIFT**

(45) Veröffentlichungstag der Patentschrift:
**14.03.84**

(21) Anmeldenummer: **80107674.6**

(22) Anmeldetag: **05.12.80**

(51) Int. Cl.³: **H 04 B 3/46, H 04 L 11/08**

(54) Überwachung von Übertragungsstrecken für digitale Signale mit höherer Übertragungsgeschwindigkeit.

(30) Priorität: **10.12.79 DE 2949639**

(43) Veröffentlichungstag der Anmeldung:
**08.07.81 Patentblatt 81/27**

(45) Bekanntmachung des Hinweises auf die Patenterteilung:
**14.03.84 Patentblatt 84/11**

(84) Benannte Vertragsstaaten:
**AT BE CH DE FR GB IT LI NL SE**

(56) Entgegenhaltungen:
**DE - A - 2 454 494**
**DE - A - 2 826 675**
**GB - A - 1 251 121**
**US - A - 3 904 827**

(73) Patentinhaber: **SIEMENS AKTIENGESELLSCHAFT,
Berlin und München Wittelsbacherplatz 2,
D-8000 München 2 (DE)**

(72) Erfinder: **Ebenhöh, Peter, Dipl.-Ing.,
Gabriele-Münter-Strasse 17, D-8000 München 71 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Überwachung von Übertragungsstrecken für digitale Signale mit höherer Übertragungsgeschwindigkeit

Die Erfindung betrifft ein Verfahren zur Überwachung von Übertragungsstrecken für digitale Signale mit höherer Übertragungsgeschwindigkeit mit in periodischen Abständen in die Übertragungsstrecke eingefügten, Impulsgeneratoren enthaltenden Zwischenstellen durch Überwachung der von diesen Zwischenstellen ausgesandten Kennsignale und eine Anordnung zur Durchführung dieses Verfahrens.

Mit der weiteren Verbreitung von PCM-Grundsystemen mit Bitraten von 2 Mbit/s steigt der Bedarf nach PCM-Übertragungssystemen für höhere Bitraten. Dabei haben sich PCM-Systeme mit 8, 34 und 140 Mbit/s als zweckmäßig erwiesen. Im Hinblick auf die Dämpfung im Übertragungsmedium sind für räumlich ausgedehnte Übertragungsstrecken Zwischenstellen erforderlich, die bei Übertragungssystemen hoher Bitrate in vergleichsweise geringen Abständen angeordnet sind und das übertragene digitale Signal hinsichtlich der Signalamplitude und hinsichtlich der beiden Übertragungsrichtungen entzerren und regenerieren.

Bei mittels Kupferkabeln oder Lichtwellenleitern aufgebauten Übertragungsstrecken werden die Zwischenstellen über einen zusätzlichen Gleichstromweg ferngespeist. Im Hinblick auf die Isolation des dafür verwendeten Kabels und die Stromaufnahme der einzelnen Zwischenstellen ist von einer Fernspeisestelle aus nur eine bestimmte begrenzte Anzahl an Zwischenstellen fernspeisbar. Eine Übertragungsstrecke kann damit aus mehreren Fernspeiseabschnitten bestehen.

Aus der DE-A-2 713 918 ist bereits eine Frequenzmultiplex-Signalübertragungseinrichtung bekannt, bei der fehlerhafte Betriebszustände in Leitungsnetzen der elektrischen Nachrichtenübertragungstechnik zu einer Endstelle dadurch rückgemeldet werden, daß eine Mehrzahl von Signalen zu einer Überwachungseinrichtung übertragen werden, daß diese Signale sich hinsichtlich ihrer Frequenz voneinander unterscheiden und gemeinsam in einem bestimmten Übertragungskanal, beispielsweise im Sprachband, übertragen werden, und jedes Signal das Kennsignal für einen bestimmten Teil der zu überwachenden Einrichtung darstellt.

Aus »Philips Telecommunication Review«, August 1979, Seiten 144 bis 160, ist ein digitales Übertragungssystem über Koaxialkabel mit einer Bitrate von 140 Mbit/s bekannt, bei dem zur Fehlerortung ein 10-kHz-Ton über den Fernspeiseweg übertragen wird. Die Adresse jeder Zwischenstelle wird mittels eines Adressencodierers dem 10-kHz-Ton aufmoduliert, so daß neben zusätzlichen Verstärkern für den 10-kHz-Ton auch ein Adressencodierer benötigt wird. Wegen der niedrigen Frequenz des verwendeten Pilottons sind die verwendeten Einrichtungen blitzgefährdet; im Hinblick auf den bei etwas höheren Frequenzen beginnenden Sperrbereich der üblicherweise verwendeten Fernspeiseweichen kann aber nicht auf einen Pilotton mit einer deutlich höheren Frequenz ausgewichen werden. Wegen der Verwendung des Fernspeiseweges ist das beschriebene Verfahren für jeden Fernspeiseabschnitt getrennt durchzuführen und damit in seiner Reichweite begrenzt. Eine entsprechende Überwachungseinrichtung wäre dann bei einer längeren Übertragungsstrecke unverhältnismäßig aufwendig.

Aus der DE-A-2 826 675 ist ein Fehlerortungssystem für Datenübertragungsleitungen bekannt, das zwischen überwachenden Leitungsendgeräten überwachende Paare von Impulsgeneratoren enthält. In den Leitungsendgeräten sind Fehlerdetektoren vorgesehen, die das Übertragungssignal auf Fehlerüberwachung und im Fehlerfall eine Alarmmeldung über eine zentrale Leitung an das jeweils im Signalweg vorherangeordnete Leitungsendgerät abgeben. Von diesem Leitungsendgerät wird dann der eigentliche Fehlerortungsvorgang ausgelöst, bei dem durch Aussendung eines zusätzlichen Signals eine Schleifenbildung zwischen den einzelnen Impulsregeneratoren eines Paares bewirkt wird. Das zusätzliche Signal wird dabei nicht im Übertragungsbereich des digitalen Signals übertragen, sondern im Tiefpaßweg zusammen mit dem Fernspeisestrom.

Aus der US-A-3 904 827 ist ein Fehlerortungssystem für Leitungsverstärker von Verstärkerstellen in einer Übertragungsstrecke für analoge Signale bekannt, bei dem in den Verstärkerstellen ständig wirksame Fehlerortungsoszillatoren vorgesehen sind, die jeweils mit dem Eingang eines Leitungsverstärkers gekoppelt sind. Die von den Fehlerortungsoszillatoren abgegebenen Signale werden über einen Teil der Übertragungsstrecke zu einer Empfangsanordnung übertragen und dort ausgewertet. Die zusätzlichen Signale liegen in einem Frequenzbereich, in dem keine Trägerfrequenzsignale übertragen werden, so daß eine gegenseitige Beeinflussung beider Signalarten weitgehend ausgeschlossen werden kann. Eine sehr ähnliche Einrichtung zur Fehlerortung bei trägerfrequenten Übertragungsstrecken mit pilotgeregelten Verstärkern für die Übertragung trägerfrequenter analoger Signale ist aus der DE-A-2 454 494 bekannt.

Die Aufgabe der vorliegenden Erfindung besteht nun darin, ein Verfahren zur Überwachung von Übertragungsstrecken der eingangs erwähnten Art zu entwickeln, das für digitale Übertragungsstrecken mit Bitfolgefrequenzen von über 100 Mbit/s geeignet ist, einen möglichst geringen Aufwand benötigt und von dem in seiner räumlichen Ausdehnung begrenzten und außerdem blitzgefährdeten Fernspeiseweg unabhängig ist.

Erfindungsgemäß wird die Aufgabe dadurch gelöst, daß die Kennsignale im Übertragungsbereich der digitalen Signale und in einem Frequenzbereich liegen, der etwa 2 ... 4‰ der Nyquistfrequenz der digitalen Signale entspricht, daß die Gesamtheit der empfangenen Kennsignale in den Zwischenstellen vom Übertragungssignal abgetrennt, in einem von der Impulsregeneration für das digitale Signal unabhängigen Übertragungsweg verstärkt, geformt und anschließend dem regenerierten digitalen Signal zugesetzt werden, aus dem vorher die Anteile ausgeblendet wurden, die durch die Kennsignale ersetzt werden, daß in jeder Zwischenstelle die übertragenen digitalen Signale überwacht werden und bei Überschreiten eines bestimmten Fehlerwertes das von dieser Zwischenstelle abgegebene Kennsignale in erkennbarer Weise verändert wird. Der Hauptvorteil des erfindungsgemäßen Verfahrens liegt darin, daß es zusätzlich eine einfache Möglichkeit zur Fehlerortung bietet. Diese Möglichkeit basiert auf dem Aufbau der Fernspeiseeinrichtungen bei mittels Kabel aufgebauten Übertragungsstrecken, die in den Zwischenstellen einen selbsttätig wirkenden Schaltzusatz zur Bildung einer Fernspeiseschleife bei Fernstromausfall enthalten. Ein besonderer Vorteil des erfindungsgemäßen Verfahrens liegt darin, daß es unabhängig vom Aufbau der Übertragungsstrecke ist und damit beispielsweise auch für die in der Entwicklung befindlichen Lichtwellenleitersysteme verwendbar ist. Dadurch kann von einer zentralen Stelle aus eine Vielzahl verschiedener Nachrichtenübertragungsstrecken überwacht werden, so daß eine Ersatzschaltung nicht an eine bestimmte Art von Übertragungsstrecken gebunden ist.

Im Hinblick auf möglichst geringen Aufwand ist eine Weiterbildung des erfindungsgemäßen Verfahrens zweckmäßig, bei dem die Überwachung der digitalen Signale dadurch erfolgt, daß diese auf Verletzungen der bei ihrer Bildung verwendeten Coderegel überwacht werden.

Besonders wichtig ist es, eine langsame Verschlechterung der Übertragungsstrecke rechtzeitig zu erkennen. Dafür ist eine Variante des erfindungsgemäßen Verfahrens bevorzugt einsetzbar, bei der die Bitfehlerquote der digitalen Signale in bestimmte Fehlerstufen eingeteilt ist und beim Erreichen einer bestimmten Fehlerstufe das von der Zwischenstelle abgegebene Kennsignal in einer diese Fehlerstufe kennzeichnenden Weise verändert wird.

Während der Übertragung der digitalen Signale und der zusätzlichen Kennsignale entsprechend dem erfindungsgemäßen Verfahren können diese Signale erheblich verändert werden und gegebenenfalls auch die ihnen aufgeprägte Information verlieren. Eine Weiterbildung der Erfindung behebt dieses Problem dadurch, daß das von den Zwischenstellen abgegebene Kennsignal beim Erreichen einer bestimmten Fehlerrate amplitudengetastet wird.

Weitere vorteilhafte Ausbildungen des erfindungsgemäßen Verfahrens sind den Patentansprüchen 5 bis 9 entnehmbar, während eine zweckmäßige Anordnung zur Durchführung des erfindungsgemäßen Verfahrens in den Patentansprüchen 10 bis 14 beschrieben ist.

Die Erfindung wird im folgenden anhand eines in der Zeichnung dargestellten Ausführungsbeispiels näher erläutert. In der Zeichnung zeigt

Fig. 1 das Blockschaltbild eines Teils einer Zwischenstelle einer digitalen Übertragungsstrecke für eine Übertragungsrichtung,

Fig. 2 ein Frequenzdiagramm zu der in der Fig. 1 dargestellten Anordnung,

Fig. 3 das Blockschaltbild eines Teils einer Zwischenstelle einer digitalen Übertragungsstrecke für beide Übertragungsrichtungen.

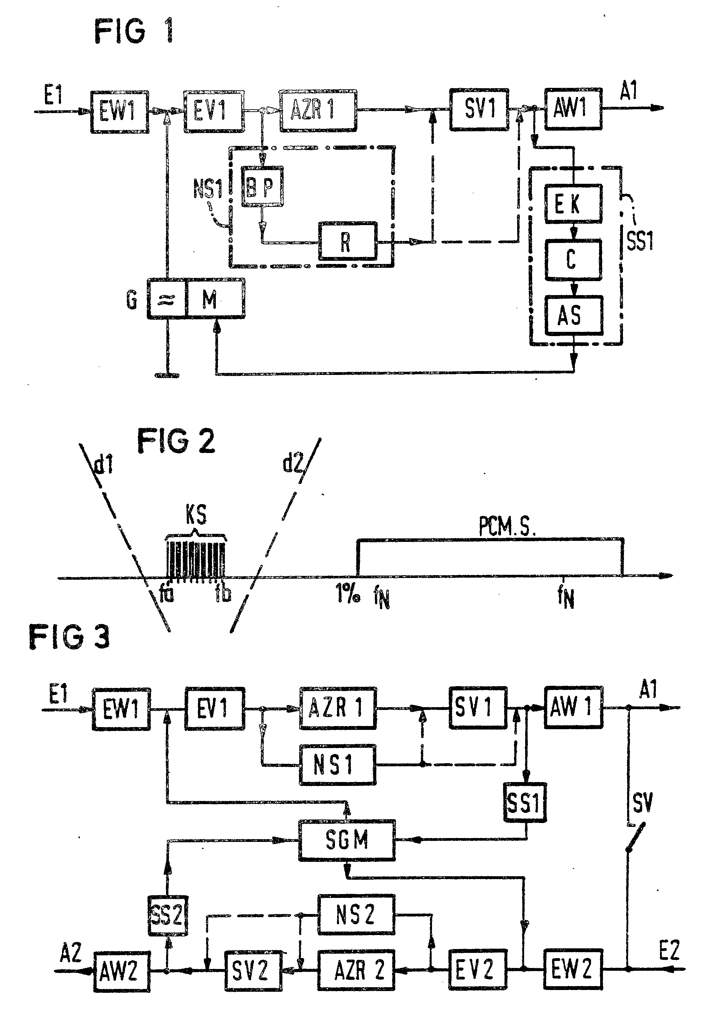

In der Fig. 1 sind schematisch die für die Erläuterung der Erfindung wesentlichen Teile einer Zwischenstelle eines digitalen Nachrichtenübertragungssystems für eine Gesprächsrichtung dargestellt. An den Eingang E1 schließt sich eine Fernspeiseweiche EW1 an, durch die die Übertragungssignale und die von den vorgeschalteten Zwischenstellen erzeugten Kennsignale vom Fernspeisestrom abgetrennt werden. Die betrachtete Zwischenstelle ist in einer mittels Koaxialkabeln aufgebauten Übertragungsstrecke eingesetzt. Deshalb ist an den Ausgang der Fernspeiseweiche ein Entzerrerverstärker EV1 angeschlossen, der zur Kompensation der frequenzabhängigen Dämpfung im Übertragungskabel dient. An den Entzerrerverstärker schließt sich der Amplituden-Zeitregenerator AZR1 an, in dem die digitalen Signale hinsichtlich der Amplitude und der zeitlichen Lage regeneriert werden. Mit dem Ausgang dieses Regenerators ist ein Sendeverstärker SV1 verbunden, der ein Sendesignal erzeugt, das über die Ausgangsweiche AW1 an den Ausgang A1 der Zwischenstelle in Übertragungsrichtung und damit an die nächste Kabelstrecke abgegeben wird. Zusätzlich ist in dieser Schaltungsanordnung ein Generator G vorgesehen, der einen die Zwischenstelle bezeichnenden Kennton erzeugt und diesen am Eingang des Entzerrerverstärkers EV1 in den Übertragungsweg einspeist. Der Anschluß des Generators G ist dabei nicht an diesen Einspeisepunkt gebunden, es ist auch in Abhängigkeit von dem Ausgangspegel des Generators eine Einspeisung am Ausgang des Entzerrerverstärkers EV1 möglich. Mit dem Ausgang des Entzerrerverstärkers ist zusätzlich ein Nebenschlußweg NS1 verbunden, der aus der Reihenschaltung eines Bandpasses BP und eines Reglers R besteht. Durch den Bandpaß BP wird die Vielzahl der von den Generatoren G der einzelnen Zwischenstellen erzeugten Kennsignale aus dem Übertragungssignal herausgefiltert und über den angeschlossenen Regler R, der zusätzlich einen Verstärker enthält, geformt und verstärkt und anschließend einem Eingang oder einem Ausgang des Sendeverstärkers SV1 zugeführt. Der Regler R dient dabei zur Einstellung der Amplitude der Gesamtheit der Kennsignale, wobei die Regelung über einen im Regler enthaltenen zweiten Bandpaß erfolgt, der über einen Regelverstärker aus dem Ausgangssignal des Reglers eine von der Amplitude der Kennsignale abhängige Stellgröße erzeugt.

Der Sendeverstärker SV1 kann als analoger Verstärker oder auch als Schaltverstärker aufgebaut sein. Beim Aufbau dieses Verstärkers als Analogverstärker ist es zweckmäßig, dessen Verstärkung für die Kennsignale mit auszunutzen, so daß in diesem Falle der Ausgang des Reglers R mit dem Eingang des Sendeverstärkers verbunden ist.

Bei der Regenerierung von pseudoternären Signalen ist es üblich, die Signale in zwei unipolare Impulszüge aufzuteilen, wobei der eine Impulszug die positiven und der andere Impulszug die negativen Impulsanteile der pseudoternären Signale repräsentiert. Diese beiden unipolaren Impulszüge werden im Amplituden- und Zeitgenerator AZR1 getrennt regeneriert. Zur Erzeugung der pseudoternären Signale ist es zweckmäßig, in diesem Falle als Sendeverstärker SV1 einen Schaltverstärker vorzusehen, dem die beiden unipolaren Impulszüge zugeführt werden. Durch den Schaltverstärker werden aber auch Leistungsanteile in dem Frequenzbereich erzeugt, der für die Kennsignale KS vorbehalten ist. Der Sendeverstärker SV1 als Schaltverstärker enthält deshalb einen seinem Ausgang vorgeschalteten Hochpaß, durch den die störenden Anteile unterdrückt werden. Die Kennsignale werden deshalb erst am Ausgang des Sendeverstärkers SV1 in den Übertragungsweg eingekoppelt.

Im Hinblick auf die gewünschte Überwachungsfunktion für das digitale Signal ist mit dem Ausgang des Sendeverstärkers SV1 zusätzlich ein Steuersignalgeber SS1 verbunden. Dieser Steuersignalgeber enthält eine Reihenschaltung aus einem Entkoppelglied EK, einer Schaltung C zur Coderegelüberwachung und einer Auswerteschaltung AS. Das Entkoppelglied EK besteht aus einem Trennverstärker und einem Filter, durch das die Kennsignale unterdrückt werden. Die Anordnung C zur Coderegelüberwachung besteht aus einem an sich bekannten Gatternetzwerk, durch das Verstöße gegen die bei der Bildung der digitalen Signale verwendete Coderegel, beispielsweise eine Regel entsprechend dem 4B3T-Code, zu einem Ausgangssignal führen. Derartige Verstöße, die beispielsweise im Auftauchen von unerwünschten logischen Eins-Impulsen bestehen können, müssen durch Störungen auf der Übertragungsstrecke verursacht worden sein, so daß die Anzahl der Verstöße gegen die Coderegel ein Maß für die Fehlerhäufigkeit der übertragenen digitalen Signale darstellt.

Die Auswerteschaltung AS stellt einen Zähler für die Ausgangsimpulse der Coderegelüberwachung dar, wobei der Zähler periodisch abgefragt wird und das Abfrageergebnis mit einem oder mehreren eingestellten Festwerten verglichen wird. Von der Auswerteschaltung AS wird eine charakteristische Impulsfolge abgegeben, je nachdem, ob bei dem Vergleich Bitfehlerquoten von $10^{-12}$, $10^{-9}$ oder $10^{-6}$ überschritten werden. Dadurch ist eine sichere Überwachung des betrachteten Kabelabschnittes mit der angeschlossenen Zwischenstelle möglich. Die Ausgangssignale der Auswerteschaltung AS stellen die Ausgangssignale des Steuersignalgebers SS1 dar, die einem Steuersignaleingang eines Modulators M zugeführt werden. Durch den Modulator erfolgt eine Modulation des vom Generator G erzeugten Kennsignals in Form einer charakteristischen Amplitudentastung. Im Hinblick auf die in der Praxis sich sehr langsam ändernden Übertragungseigenschaften reicht es aus, wenn in Abständen von mehreren Sekunden die beschriebene Auswertung des digitalen Signals erfolgt und die Amplitudentastung des erzeugten Kennsignals mit Tastzeiten von 0,5 bis 1 sec erfolgt.

Der in der Fig. 1 beschriebene Teil einer Zwischenstelle ist bis auf den im Generator G verwendeten Steuerquarz für sämtliche Zwischenstellen gleich. Lediglich der verwendete Steuerquarz, dessen Frequenz die betreffende Zwischenstelle kennzeichnet, ist von Zwischenstelle zu Zwischenstelle unterschiedlich.

In der Fig. 2 sind in einem Frequenzdiagramm die zu übertragenden PCM-Signale PCMS und die Vielzahl der von den einzelnen Generatoren G der Zwischenstellen erzeugten Kennsignale KS dargestellt. Während die PCM-Signale mit einer Bitfolgefrequenz von etwa 140 Mbit/s übertragen werden, sind die Kennsignale KS in einem Frequenzbereich von etwa 120 bis 200 kHz in einem 100-Hz-Raster unterteilt vorgesehen. Die beiden Frequenzgrenzen der Gesamtheit der Kennsignale sind mit $f_a$ und $f_b$ bezeichnet, während die PCM-Signale durch die Nyquistfrequenz und durch 1% dieser Frequenz dargestellt sind. Mit d1 ist der Dämpfungsverlauf der Eingangsweiche EW1 dargestellt, während d2 den Dämpfungsverlauf des Bandpasses BP an dessen oberer Frequenzgrenze bezeichnet.

In der Fig. 3 ist der in der Fig. 1 dargestellte Teil einer Zwischenstelle für eine Übertragungsstelle für eine Übertragungsrichtung durch einen weiteren Teil ergänzt, der in die andere Übertragungsrichtung wirkt. Dabei entsprechen die zwischen dem ersten Eingangs- und dem ersten Ausgangsanschluß für die Gegenrichtung angeordneten Teile der in der Fig. 1 dargestellten Anordnung bis auf die zentrale Steueranordnung SGM, die neben einem für beide Übertragungsrichtungen gemeinsamen Generator und einem entsprechenden Modulator eine zusätzliche Steuereinrichtung enthält. Diese Steuereinrichtung kann beispielsweise aus einem ODER-Gatter bestehen, dem an seinem einen Anschluß die Ausgangssignale des ersten Steuersignalgebers SS1 für die eine Übertragungsrichtung und am anderen Eingangsanschluß die Ausgangssignale des zweiten Steuersignalgebers SS2 für die Gegenrichtung zugeführt werden. Im Hinblick auf das Überschreiten von bestimmten Bitfehlerstufen können beispielsweise auch drei ODER-Gatter parallel vorgesehen sein, deren Eingänge jeweils mit einem von drei parallelen Ausgängen der einzelnen Steuersignalgeber verbunden sind und deren Ausgänge über eine Vorrangschaltung mit dem Steuersignaleingang des Kennsignalgebers SGM verbunden sind. Im Hinblick auf die zusätzliche Verwendung der beschriebenen Einrichtung zur Fehlerortung wird zunächst die Funktion des »Schaltzusatzes« erläutert.

Eine kombinierte Fernspeise- und Fehlerortungseinrichtung stellt der aus der Trägerfrequenztechnik bekannte »Schaltzusatz« dar, der in jeder dieser Zwischenstellen enthalten ist. Zur Wirkungsweise dieses Schaltzusatzes sei zunächst angenommen, daß die Übertragungsstrecke durch einen Kabelbruch gestört ist. In diesem Falle werden die angeschlossenen Fernspeisegeräte automatisch abgeschaltet, so daß zunächst der gesamte Fernspeiseabschnitt stillgelegt ist. Dabei werden automatisch durch in jeder Zwischenstelle befindliche Relais die Schleifenverbindungen SV zwischen den beiden Fernspeiseadern geschaltet. Danach schalten sich die in den Endgeräten befindlichen Fernspeisegeräte wieder ein, wobei die Fernspeisespannung langsam gesteigert wird und durch den auf dem Übertragungsweg fließenden Fernspeisestrom die Schleifenverbindungen in den Zwischenstellen des ungestörten Streckenabschnittes aufgehoben werden, während die Schleifen in den an den gestörten Streckenabschnitt angrenzenden beiden Zwischenstellen bestehen bleibt. Anschließend kann über die gesamte Schleife bzw. über beide Schleifen von den jeweiligen Leitungsendgeräten aus die Fehlerstelle durch Auswertung der in den beiden Endstellen empfangenen Kennsignale geortet werden.

**Patentansprüche**

1. Verfahren zur Überwachung von Übertragungsstrecken für digitale Signale mit höherer Übertragungsgeschwindigkeit mit in periodischen Abständen in die Übertragungsstrecke eingefügten, Impulsregeneratoren enthaltenden Zwischenstellen durch Überwachung der von diesen Zwischenstellen ausgesandten Kennsignale, dadurch gekennzeichnet, daß die Kennsignale im Übertragungsbereich der digitalen Signale und in einem Frequenzbereich liegen, der etwa 2 . . . 4%₀ der Nyquistfrequenz der digitalen Signale entspricht, daß die Gesamtheit der empfangenen Kennsignale in den Zwischenstellen vom Übertragungssignal abgetrennt, in einem von der Impulsregeneration für das digitale Signal unabhängigen Übertragungsweg verstärkt, geformt und anschließend dem regenerierten digitalen Signal zugesetzt werden, aus dem vorher die Anteile ausgeblendet wurden, die durch die Kennsignale ersetzt werden, daß in jeder Zwischenstelle die übertragenen digitalen Signale überwacht werden und bei Überschreiten eines bestimmten Fehlerwertes das von dieser Zwischenstelle abgegebene Kennsignal in erkennbarer Weise verändert wird.

2. Verfahren nach Patentanspruch 1, dadurch gekennzeichnet, daß die Überwachung der digitalen Signale dadurch erfolgt, daß diese auf Verletzungen der bei ihrer Bildung verwendeten Coderegel überwacht werden.

3. Verfahren nach Patentanspruch 1 oder 2, dadurch gekennzeichnet, daß die Bitfehlerquote der digitalen Signale in bestimmte Fehlerstufen eingeteilt ist und beim Erreichen einer bestimmten Fehlerstufe das von der Zwischenstelle abgegebene Kennsignal in einer diese Fehlerstufe kennzeichnenden Weise verändert wird.

4. Verfahren nach einem der Patentansprüche 1 bis 3, dadurch gekennzeichnet, daß das von den Zwischenstellen abgegebene Kennsignal beim Erreichen einer bestimmten Fehlerrate amplitudengetastet wird.

5. Verfahren nach Patentanspruch 1, dadurch gekennzeichnet, daß die Kennsignale in einem Frequenzbereich liegen, der frequenzmäßig im Hochpaßbereich der Fernspeiseweichen der Zwischenstellen liegt.

6. Verfahren nach einem der Patentansprüche 1, 4 oder 5, dadurch gekennzeichnet, daß bei der Übertragung digitaler Signale mit einer Bitrate von 140 Mbit/s die Kennsignale in einem 100-Hz-Raster im Frequenzbereich von 120 bis 200 kHz liegen.

7. Verfahren nach einem der Patentansprüche 1 oder 4 bis 6, dadurch gekennzeichnet, daß die Vestärkung der Kennsignale in dem von der Impulsregeneration getrennten Übertragungsweg in Abhängigkeit von der Amplitude eines weiteren zusätzlichen Signals, das vom sendenden Leitungsendgerät ausgeht, geregelt wird.

8. Verfahren nach Patentanspruch 1, dadurch gekennzeichnet, daß nach Ausfall der Übertragungsstrecke beim Wiedereinschalten des Fernspeisestromes eine beim Abschalten selbsttätig geschlossene Schleifenverbindung für den Fernspeisestrom zur Ader für die Gegenrichtung in wenigstens einer an den gestörten Übertragungsabschnitt angrenzenden Zwischenstelle geschlossen bleibt und ein verändertes Kennsignal in dieser Zwischenstelle in den Übertragungsweg für die Gegenrichtung eingespeist wird.

9. Verfahren nach Patentanspruch 8, dadurch gekennzeichnet, daß das in der Zwischenstelle erzeugte Kennsignal direkt in den Übertragungsweg für die Gegenrichtung eingespeist wird.

10. Verfahren nach Patentanspruch 8, dadurch gekennzeichnet, daß das in der Zwischenstelle erzeugte Kennsignal über eine zusätzlich gebildete Schleifenverbindung in den Übertragungsweg für die Gegenrichtung eingespeist wird.

11. Anordnung zur Durchführung des Verfahrens nach einem der Patentansprüche 1 bis 10 in einer Zwischenstelle, die eingangsseitig und ausgangsseitig jeweils eine Fernspeiseweiche (EW1, AW1; EW2, AW1) und außerdem eingangsseitig einen Entzerrerverstärker (EV1; EV2), einen diesem nachgeschalteten Amplituden- und Zeitgenerator (AZR1; AZR2) und einen Sendeverstärker (SV1; SV2) für jede Übertragungsrichtung enthält, dadurch gekennzeichnet, daß eine Modulator-Generatoranordnung (M, G) zur Erzeugung eines modulierten Kennsignals vorgesehen ist, deren Ausgang in Abhängigkeit vom Pegel des Kennsignals entweder mit dem Eingang oder mit dem Ausgang des Entzerrerverstärkers (EV1; EV2) verbunden ist, daß ein mit dem Ausgang des Entzerrerverstärkers verbundener Nebenschlußweg (NS1; NS2) vorgesehen ist, der die Reihenschaltung eines Bandpasses (BP) und eines Reglers (R) enthält, daß der Bandpaß (BP) einen Durchlaßbereich entsprechend der Gesamtheit der Kennsignale aufweist, daß der Regler (R) ein regelbares Dämpfungsglied für die Gesamtheit der Kennsignale darstellt, dessen Ausgang an den Ausgang des Sendeverstärkers (SV1; SV2) angeschlossen ist, sofern der Sendeverstärker ein Schaltverstärker ist, und dessen Ausgang an den Eingang des Sendeverstärkers angeschlossen ist, sofern der Sendeverstärker ein Analogverstärker ist, daß mit dem Ausgang des Sendeverstärkers ein Steuersignalgeber (SS1; SS2) verbunden ist, der in Abhängigkeit von der Fehlerrate im übertragenen digitalen Signal ein Ausgangssignal erzeugt, das den angeschlossenen Modulator der Modulator-Generatoranordnung (G, M) zur Erzeugung eines amplitudenmodulierten Kennsignals veranlaßt.

12. Anordnung nach Patentanspruch 11, dadurch gekennzeichnet, daß der Steuersignalgeber (SS1; SS2) eine Reihenschaltung aus einem Entkopplungsglied (EK), eine Anordnung (C) zur Coderegelüberwachung für das digitale Signal und eine Auswerteschaltung (AS) enthält.

13. Anordnung nach Patentanspruch 11 oder 12, dadurch gekennzeichnet, daß in einer Zwischenstelle eine die Modulator-Generatoranordnung (GM) der einzelnen Übertragungsrichtungen ersetzende zentrale Steueranordnung (SGM) mit zwei Steuereingängen und zwei Ausgängen vorgesehen ist, deren Eingänge mit den Ausgängen der Steuersignalgeber (SS1, SS2) für die einzelnen Übertragungsrichtungen verbunden sind und deren Ausgänge anstelle der Generator-Modulatoranordnungen (GM) mit den Entzerrerverstärkern (EV1, EV2) für die einzelnen Übertragungsrichtungen verbunden sind.

14. Anordnung nach einem der Patentansprüche 11 bis 13, dadurch gekennzeichnet, daß die zentrale Steueranordnung (SGM) ein mit deren Eingängen verbundenes ODER-Gatter mit nachgeschalteter Generator-Modulatoranordnung (GM) enthält.

## Claims

1. Method for the monitoring of transmission links for digital signals with a higher transmission speed, by means of intermediate stations which are interposed into the transmission link at periodic distances and which contain pulse regenerators, by the monitoring of the identification signals which are emitted from these intermediate stations, characterised in that the identification signals occur in the transmission range of the digital signals and in a frequency range which corresponds to approximately 2 ... 4‰ of the Nyquist frequency of the digital signals, that all the received identification signals in the intermediate stations are separated from the transmission signal, are amplified in a transmission path which is independent of the pulse regeneration for the digital signal, are shaped, and are subsequently attached to the regenerated digital signal from which the components which are being replaced by the identification signals were previously gated out, that in each intermediate station the transmitted digital signals are monitored and when a specific error value is exceeded the identification signal emitted from this intermediate station is modified in a recognisable manner.

2. Method as claimed in patent claim 1, characterised in that the digital signals are monitored in that they are monitored in respect of infringements of the code rule employed in their formation.

3. Method as claimed in patent claims 1 or 2, characterised in that the bit error quota of the digital signals is split into specified error stages and when a specified error stage is reached the identification signal emitted from the intermediate station is modified in a manner which characterises this error stage.

4. Method as claimed in one of the patent claims 1 to 3, characterised in that when a specified error rate is reached the identification signal emitted from the intermediate stations is amplitude-keyed.

5. Method as claimed in patent claim 1, characterised in that the identification signals occur in a frequency range which lies, in respect of frequency, in the high-pass range of the remote-feed separating filters of the intermediate stations.

6. Method as claimed in one of the patent claims 1, 4 or 5, characterised in that when digital signals are transmitted at a bit rate of 140 Mbit/s, the identification signals occur in a 100-Hz-pattern in the frequency range from 120 to 200 kHz.

7. Method as claimed in one of the patent claims 1, 4 to 6, characterised in that the amplification of the identification signals in the transmission path which is separated from the pulse regeneration is regulated in dependence upon the amplitude of a further, additional signal which emanates from the transmitting line terminal device.

8. Method as claimed in patent claim 1, characterised in that following breakdown of the transmission path, when the remote-feed current is reconnected, a loop connection, which is automatically closed at the time of switch-off, for the remote-feed current to the wire for the opposite direction remains closed in at least one intermediate station adjoining the faulty transmission section, and in this intermediate station a modified identification signal is fed into the transmission path for the opposite direction.

9. Method as claimed in patent claim 8, characterised in that the identification signal which is generated in the intemediate station is fed directly into the transmission path for the opposite direction.

10. Method as claimed in patent claim 8, characterised in that the identification signal which is produced in the intermediate station is fed via an additionnally formed loop connection into the transmission path for the opposite direction.

11. Arrangement for the implementation of the method as claimed in one of the patent claims 1 to 10, in an intermediate station which includes, at its input and at its output, a remote-feed separating filter, EW1, AW1; EW2, and at its input additionally includes a regenerative (EV1; EV2), a following-connected amplitude-and time-regenerator (AER1; AER2) and a transmitting amplifier (SV1; SV2) for each direction of transmission, characterised in that a modulator-generator arrangement (M, G) is provided which serves to produce a modulated identification signal and whose output is connected either to the input or the output of the regenerative repeater (EV1; EV2) in dependence upon the level of the identification signal, that a shunt path (NS1; NS2) is provided which is connected to the output of the regenerative repeater and which includes the series arrangement of a band-pass filter (BP) and a regulator (R), that the band-pass filter (BP) has a pass band corresponding to the total of the identification signals, that the regulator (R) constitutes a regulatable attenuating element for all the identification signals, whose output is connected to the output of the transmitting amplifier (SV1; SV2) if the transmitting amplifier is a switching amplifier, and whose output is connected to the input of the transmitting amplifier if the transmitting amplifier is an analogue amplifier, that the output of the transmitting amplifier is connected to a control signal generator (SS1; SS2) which, in dependence upon the error rate in the transmitted digital signal, produces an output signal which causes the connected modulator of the modulator-generator arrangement (G, M) to produce an amplitude-modulated identification signal.

12. Arrangement as claimed in patent claim 11, characterised in that the control signal generator (SS1; SS2) includes a series circuit of a decoupling element (EK), an arrangement (C) for code rule monitoring of the digital signal, and an analysis circuit (AS).

13. Arrangement as claimed in patent claims 11 or 12, characterised in that in an intermediate station there is provided a central control arrangement (SGM) which replaces the modulator-generator arrangement (GM) of the individual transmission directions and which has two control inputs and two outputs, and whose inputs are connected to the outputs of the control signal generators (SS1, SS2) for the individual transmission directions and whose outputs are connected, in place of the generator-modulator arrangements (GM), to the regenerative repeaters (EV1, EV2) for the individual transmission directions.

14. Arrangement as claimed in one of the patent claims 10 to 13, characterised in that the central control arrangement (SGM) includes an OR-gate which is connected to its inputs followed by a generator-modulator arrangement (GM).

**Revendications**

1. Procédé pour contrôler, de voies de transmission pour des signaux numériques, à une vitesse assez élevée de transmission comportant des postes intermédiaires insérés à des intervalles périodiques dans la voie de transmission et contenant des régénérateurs d'impulsions, par contrôle des signaux caractéristiques émis par ces postes intermédiaires, caractérisé par le fait que les signaux caractéristiques sont situés dans la voie de transmission des signaux numériques et dans une plage de fréquences, qui correspond à environ 2 ... 4‰ de la fréquence de Nyquist des signaux numériques, que la totalité des signaux caractéristiques reçus sont séparés du signal de transmission, dans les postes intermédiaires sont amplifiés et mis en forme dans une voie de transmission indépendante de la régénération d'impulsions pour le signal numérique et sont ensuite ajoutés au signal numérique régénéré, à partir duquel ont été extraites les composantes qui sont remplacées par les signaux caractéristiques, que dans chaque poste intermédiaire les signaux numériques transmis sont contrôlés et que lors du dépassement d'une valeur d'erreurs déterminée, le signal caractéristique délivré par le poste intermédiaire est modifié de façon identifiable.

2. Procédé suivant la revendication 1, caractérisé par le fait que le contrôle des signaux numériques s'effectue de telle manière que les signaux sont contrôlés du point de vue de la présence d'infractions de la règle de code utilisée lors de leut formation.

3. Procédé suivant la revendication 2, caractérisé par le fait que le taux d'erreurs sur les bits des signaux numériques est réparti en des échelons déterminés d'erreurs et que, lorsqu'un échelon d'erreurs déterminé est atteint, le signal caractéristique délivré par le poste intermédiaire est modifié d'une manière caractéristant cet échelon d'erreurs.

4. Procédé suivant l'une des revendications 1 à 3, caractérisé par le fait que le signal caractéristique délivré par les postes intermédiaires est manipulé en amplitude lorsqu'un taux d'erreurs déterminé est atteint.

5. Procédé suivant la revendication 1, caractérisé par le fait que les signaux caractéristiques sont placés dans une plage de fréquences (50), qui est située, du point de vue des fréquences, dans la bande passehaut des aiguillages d'alimentation à distance des postes intermédiaires.

6. Procédé suivant l'une des revendications 1, 4 ou 7, caractérisé par le fait que dans le cas de la transmission de signaux numériques comportant un débit binaire de 140 Mbit/s, les signaux caractéristiques sont situés dans une trame de 100 Hz, dans la plage de fréquences allant de 120 à 200 kHz.

7. Procédé suivant l'une des revendications 1 ou 4 à 6, caractérisé par le fait que l'amplification des signaux caractéristiques dans la voie de transmission séparée de la régénération d'impulsions est réglée en fonction de l'amplitude d'un autre signal supplémentaire qui est envoyé par l'appareil terminal de ligne émetteur.

8. Procédé suivant la revendication 1, caractérisé par le fait qu'après la défaillance de la voie de transmission, lors de la réintroduction du courant d'alimentation à distance, une liaison en boucle, fermée automatiquement lors du débranchement et prévu pour le courant d'alimentation à distance en direction du conducteur pour le sens opposé, reste fermée dans au moins un poste intermédiaire jouxtant la section de transmission perturbée, et qu'un signal caractéristique modifié est introduit dans ce poste intermédiaire dans la voie de transmission pour le sens opposé.

9. Procédé suivant la revendication 8, caractérisé par le fait que le signal caractéristiques produit dans le poste intermédiaire est injecté directement dans la voie de transmission pour le sens opposé.

10. Procédé suivant la revendication 8, caractérisé par le fait que le signal caractéristique produit dans le poste intermédiaire est injecté par l'intermédiaire d'une liaison en boucle fermée en supleément, dans la voie de transmission pour le sens opposé.

11. Dispositif pour la mise en œuvre du procédé suivant l'une des revendications 1 à 10, dans un poste intermédiaire, qui contient, du côté entrée et un côté sortie, respectivement un aiguillage d'alimentation à distance (EW1, AW1; EW2, AW1), et en outre du côté entrée, un amplificateur-correcteur de distorsions (EV1, EV2), un régénérateur d'amplitude et de temps (AZR1; AZR2) branché en aval et un amplificateur d'émission (SV1, SV2) pour chaque sens de transmission, caractérisé par le fait qu'il est prévu un dispositif modulateur-générateur (L, G) servant à produire un signal caractéristique modulé et dont la sortie est reliée, en fonction du niveau du signal caractéristique, soit à l'entrée, soit à la sortie de l'amplificateur-correcteur de distorsions (EV1, EV2), qu'il est prévu une voie de dérivation (NS1, NS2) reliée à la sortie de l'amplificateur-correcteur de distorsions et qui contient le circuit série formé d'un filtre passe-bande (BP) et d'un régulateur (R), que le filtre passe-bande (BP) possède une bande de transmission correspondant à la totalité des signaux caractéristiques, que le régulateur (R) constitue un organe d'amortissement réglable pour la totalité des signaux caractéristiques et dont la sortie est raccordée à la sortie de l'amplificateur d'émission (SB1, SB2), dans la mesure où l'amplificateur d'émission est un amplificateur de commutation, et dont la sortie est raccordée à l'entrée de l'amplificateur d'émission, dans la mesure où l'amplificateur d'émission est un amplificateur analogique, qu'à la sortie de l'amplificateur d'émission est relié un générateur de signaux de commande (SS1, SS2) qui produit, en fonction du taux d'erreurs dans le signal numérique transmis, un signal de sortie qui déclenche le modulateur raccordé du dispositif à modulateur-générateur (G, M), pour la production d'un signal caractéristique modulé en amplitude.

12. Dispositif suivant la revendication 8, caractérisé par le fait que le générateur de signaux de commande (SS1; SS2) contient un circuit série formé d'un organe de découplage (EK), d'un dispositif (C) pour le contrôle de la règle de code pour le signal numérique et d'un circuit d'exploitation (AS).

13. Dispositif suivant la revendication 11 ou 12, caractérisé par le fait que dans un poste intermédiaire se trouve prévu un dispositif cent-al de commande (SGM) remplaçant le dispositif à modulateur-générateur (GM) des différents sens de transmission et comportant deux entrées de commande et de sortie et dont les entrées sont reliées aux sorties des générateurs de signaux de commande (SS1, SS2) pour les différents sens de transmission et dont les sorties sont reliées, non pas aux dispositifs à générateur-modulateur (GM), mais aux amplificateurs-correcteurs de distorsions (EV1, EV2) pour les différents sens de transmission.

14. Dispositif suivant l'une des revendications 10 ou 13, caractérisé par le fait que le dispositif central de commande (SGM) contient une porte (OU) reliée aux entrées de ce dispositif et en aval de laquelle est branché un dispositif à générateur-modulateur (GM).

**FIG 1**

**FIG 2**

**FIG 3**